(19) **Europäisches Patentamt**
**European Patent Office**
**Office européen des brevets**

(11) **EP 1 445 640 B1**

(12) **EUROPÄISCHE PATENTSCHRIFT**

(45) Veröffentlichungstag und Bekanntmachung des Hinweises auf die Patenterteilung:
**30.07.2008  Patentblatt 2008/31**

(51) Int Cl.:
***G02B 27/46*** *(2006.01)*

(21) Anmeldenummer: **04002109.9**

(22) Anmeldetag: **31.01.2004**

(54) **Vorrichtung zur Erhöhung der Schärfentiefe eines optischen Systems**

Device to increase the depth of focus of an optical system

Dispositif pour augmenter la profondeur de champ d'un systeme optique

(84) Benannte Vertragsstaaten:
**AT BE BG CH CY CZ DE DK EE ES FI FR GB GR HU IE IT LI LU MC NL PT RO SE SI SK TR**

(30) Priorität: **06.02.2003  DE 10304724**

(43) Veröffentlichungstag der Anmeldung:
**11.08.2004  Patentblatt 2004/33**

(73) Patentinhaber: **Landesstiftung Baden-Württemberg gGmbH**
**70191 Stuttgart (DE)**

(72) Erfinder: **Hellmuth, Thomas**
**73431 Aalen (DE)**

(74) Vertreter: **Schmid, Wolfgang**
**Lorenz & Kollegen**
**Patent- und Rechtsanwaltskanzlei**
**Alte Ulmer Strasse 2**
**D-89522 Heidenheim (DE)**

(56) Entgegenhaltungen:
**WO-A-96/24085        DE-A- 19 733 193**

- **PATENT ABSTRACTS OF JAPAN Bd. 2000, Nr. 07, 29. September 2000 (2000-09-29) & JP 2000 098303 A (OLYMPUS OPTICAL CO LTD), 7. April 2000 (2000-04-07)**

**Beschreibung**

Die Erfindung betrifft eine Vorrichtung zur Erhöhung der Schärfentiefe eines optischen Systems, wobei das optische System mit einem Objektiv zur Lichtbündelung versehen ist.

Des weiteren betrifft die Erfindung ein Verfahren zur Herstellung von nicht-rotationssymmetrischen Phasenplatten und eine Vorrichtung zum Verschieben von Phasenplatten.

Bei vielen Anwendungen in der abbildenden Optik wird eine möglichst hohe Schärfentiefe angestrebt, um so die Anforderungen an die Genauigkeit beim Scharfstellen des Objektes möglichst klein zu halten. Ebenfalls sollten dreidimensional ausgedehnte Objekte möglichst vollständig scharf abgebildet werden. Hierbei sind insbesondere Mikroskope zu erwähnen.

Beispielsweise in Barcode-Lesegeräten sollte der Schärfebereich möglichst groß gewählt werden, damit der Streifencode auf Gegenständen unterschiedlichster Ausdehnung zuverlässig und genau erfasst werden kann. Weitere Beispiele sind in der Sicherheitstechnik optischer Systeme zur Erfassung von Fingerabdrücken oder auch bei endoskopischen Abbildungsverfahren gegeben.

Bei diesen Beispielen kommt es aber auch neben einer hohen Schärfentiefe auf eine hohe Lateralauflösung und eine hohe Lichtstärke an, da feinstrukturierte Objekte abgebildet werden sollen. Eine hohe Lateralauflösung und eine hohe Lichtstärke bei gleichzeitig hoher Schärfentiefe kann allerdings nicht zugleich erreicht werden. Eine hohe numerische Apertur des Objektivs gilt. als Voraussetzung für eine hohe Lateralauflösung und eine hohe. Lichtstärke. Umgekehrt erhält man eine hohe Schärfentiefe bei Einsatz einer niedrigen numerischen Apertur. Mit konventionellen Optikdesignkonzepten lässt sich jedoch dieser Widerspruch nicht auflösen. Zur Lösung des Problems wird derzeit ein digital arbeitendes Bildverarbeitungsverfahren auf der Basis der Wellenfrontkodierung mit optischen Masken eingesetzt.

Der Einsatz derartiger optischer Masken zur Verbesserung der Bildqualität ist auch Gegenstand vieler Fachveröffentlichungen, wie beispielsweise "Wavefront Coding: A modern method of achieving high performance and/or low cost imaging systems", E.R. Dowski and G.E. Johnson, Presented at SPIE Annual Meeting, Denver, CO, Aug, 1999, E.R. Dowski and W.T. Cathey, Applied Optics, vol. 34, no 11, pp. 1859-1866, April, 995. "An Information Theory Approach to Incoherent Information Processing Systems", E.R. Dowski, Signal Recovery and Synthesis V, OSA Technical Digest Series, pp. 106-108, March, 1995. "Defocus Transfer Function for Circularly Symmetric Pupils", A.R. FitzGerrell, E.R. Dowski, and W.T. Cathey, Applied Optics, Vol. 36, pp. 5796 - 5804 (1997). "Broadband Behavior of an Optical-Digital Focus-Invariant System", J. van der Gracht, E.R. Dowski, M. Taylor, D. Deaver, Optics Letters, July 1, 1996, Vol. 21, No 13, pp. 919-921.

Das allgemeine Prinzip der vorstehend aufgeführten Fachveröffentlichungen besteht darin, dass in der Pupillenebene eines Objektives, beispielsweise in einem Mikroskop, ein optischer Filter mit einem kubischen Phasenverlauf angeordnet ist. Dadurch kann sich aber die Modulationsübertragungsfunktion (MTF) für einen großen Defokussierungsbereich verschlechtern. Die Nullstellen der Modulationsübertragungsfunktion, welche sich bei Defokussierung ergeben, können aber durch die optischen Phasenfilter beseitigt werden, so dass eine eindeutige rechnerische Rücktransformation der Bilddaten möglich ist. Dadurch kann ein Bild mit hoher Schärfentiefe gewährleistet werden. Die Bildfunktion ändert sich nicht bei Defokussierung, wie dies ohne Einsatz eines optischen Phasenfilters der Fall wäre.

Aus der EP 0 702 817 B1 ist eine Vorrichtung zur Verbesserung der Schärfentiefe eines Strickmarkierungslasers bekannt, wobei die Vorrichtung eine Maske mit mindestens zwei Segmenten aufweist. Die mindestens zwei Segmente besitzen ein inneres und ein äußeres Segment, wobei die spezifische Durchlässigkeit der mindestens zwei Segmente verschieden ist. Die äußeren Segmente weisen eine höhere Transmission auf als die inneren Segmente. Die dadurch entstehenden kleineren und größeren Segmentbereiche sind so angeordnet, dass ihr Nah- und Fernfeldbeugungsbereich sich in einem Punkt überlappen, welcher der auflösenden Dimension eines Lichtstrahls entspricht, der über dem Arbeitsbereich verbessert wird.

Des weiteren ist aus der WO 96/24085 ein System zur Erhöhung der Schärfentiefe bekannt, welches eine optische Phasenmaske aufweist, welche hauptsächlich nur die Phase und nicht die Lichtamplitude modifiziert.

Die Phasenmaske ist so konzipiert, dass sie ein inkohärentes optisches System insoweit verändert, dass die Modulationsübertragungsfunktion des optischen Systems geändert wird, so dass diese unempfindlich gegenüber der Entfernung zwischen einem Objekt und einer Objektivlinse ist. Des weiteren ist die Phasenmaske so konstruiert, dass die Autokorrelation der Phasenmaskenfunktion in Verbindung mit den Additionsthermen des Misfokus und der Abbildungsfehler nahezu unempfindlich ist gegenüber den Thermen des Misfokusses und der Abbildungsfehler des Objektives. Derartige kubische Phasenmasken mit $f(x,y) = \alpha(x^3 + y^3)$, wobei der Parameter $\alpha$ die Stärke der kubischen Fläche bestimmt, modifizieren das optische System so, dass eine nahezu konstante MTF über einen Bereich der Objektentfernung vorherrscht. Der Bereich der Objektentfernung, für den die MTF nicht sehr variiert, ist von $\alpha$ abhängig. Der Bereich für die Objektentfernung und die Schärfentiefe erhöhen sich mit dem Wert $\alpha$, jedoch verschlechtert sich der Kontrast mit der Erhöhung von $\alpha$.

Des weiteren ist eine Vorrichtung zur Speicherung des Bildes, beispielsweise eine Videokamera, vorgesehen. Die Schärfentiefe des optischen Systems wird durch die Anordnung der optischen Phasenmaske zwischen dem Objekt und der CCD-Kamera erhöht. Durch die Unempfindlichkeit der MTF gegenüber der Entfernung zwischen dem Objekt und der Objektivlinse über einen Bereich kann die Abbildungsqualität des Bildes erhöht werden. Die Nachbearbeitung der Schärfentiefe kann danach am gespeicherten Bild vorgenommen werden.

Die WO 99/57599 beschreibt ebenfalls ein optisches System zur Erhöhung der Schärfentiefe, welches mit einer speziellen optischen Maske für inkohärentes Licht versehen ist. Die optische Maske ist so konzipiert, dass sie die Modulationsübertragungsfunktion (MTF) über einen bestimmten Bereich der In-Fokusposition konstant hält. Generell ist diese Phasenmaske in der Nähe bzw. am Pupillenort des optischen Systems angeordnet. Des weiteren beinhaltet die Vorrichtung ebenfalls eine Speichereinheit, wobei die Phasenmaske so konstruiert ist, dass sie die Modulationsübertragungsfunktion des optischen Systems derart ändert, dass diese nahezu unempfindlich gegenüber der unbekannten Entfernung des Objektes zum optischen System über eine größere Verschiebung der Objektdistanz ist, als eine unveränderliche MTF liefert. Derartige Phasenmasken können mit einem Colorfilter oder mit einem diffraktiven Element in Verbindung stehen.

Der oben erwähnte Stand der Technik weist einen wesentlichen Nachteil auf. Da bei Vergrößerungen des Wertes $\alpha$ zwar die Schärfentiefe erhöht wird, verschlechtert sich aber gleichzeitig die MTF, so dass der Kontrast des digitalen Bildes durch Kontrastanhebung verbessert werden muss. Dabei wird ebenfalls das Rauschsignal angehoben. Es ist somit nicht möglich, das optische System an die Notwendigkeit der Optik anzupassen, da mit nur einer Phasenmaske der Wert $\alpha$ den Bild- und Objektiveigenschaften nicht bestmöglichst angepasst werden kann. Somit ist es mit den Lösungen des Standes der Technik nur möglich, die Bild- und Objektiveigenschaften bestmöglichst zu schaffen, indem die Phasenmasken ausgetauscht werden müssen.

Es ist demgemäss Aufgabe der Erfindung, eine Vorrichtung der eingangs erwähnten Art zu schaffen, welche die vorstehenden Nachteile beseitigt, um den Wert $\alpha$ den Bild- und Objektiveigenschaften bestmöglichst anzupassen.

Des weiteren ist es Aufgabe der Erfindung ein Verfahren zur Herstellung der Vorrichtung zu schaffen, welches einfach durchführbar ist.

Die Aufgabe der Erfindung wird für vier Platten/Filter durch die Merkmale des Anspruches 1 und für zwei Platten/Filter durch die Merkmale des Anspruches 7 gelöst.

Erfindungsgemäß werden zur Erhöhung der Schärfentiefe eines optischen Systems vier Phasenplatten/Phasenfilter verwendet, wobei eine erste und eine zweite Phasenplatte in x-Richtung relativ zueinander in lateraler bzw. seitlicher Richtung zu einer optischen Achse verschoben werden. Die Phasenplatte 1 wird um einen gleichen Betrag in positiver x-Richtung wie die Phasenplatte 2 in negativer x-Richtung verschoben. Eine dritte und eine vierte Phasenplatte werden in y-Richtung ebenfalls relativ zueinander in lateraler Richtung zu der optischen Achse verschoben. Die Phasenplatte 3 wird um den gleichen Betrag in positiver y-Richtung und die Phasenplatte 4 in negativer y-Richtung verschoben.

Somit ist es möglich einen kubischen Parameter bzw. Phasenverlauf, welcher dem kubischen Phasenverlauf einer Phasenplatte aus dem Stand der Technik entspricht, einfach über die Verschiebung der einzelnen Phasenplatten einzustellen.

Vorteilhafterweise kann so mit Hilfe der adaptiven Phasenplatte (die vier Phasenplatten als Gesamtheit betrachtet) der Wert $\alpha$ den Bild- und Objektiveigenschaften am besten angepasst werden, damit beispielsweise bei Objekten, welche ein gutes Signalrauschverhältnis zu einem elektronischen Bildaufnahmesystem liefern, ein großes $\alpha$ (hohe Schärfentiefe, geringer Kontrast) und bei Objekten, welche ein schlechtes Signalrauschverhältnis zu dem elektronischen Bildaufnahmesystem liefern, ein kleines $\alpha$ (geringe Schärfentiefe, hoher Kontrast) eingestellt werden kann.

Ein weiterer Vorteil der Ausgestaltung der Erfindung besteht darin, dass die optischen Platten nicht-rotationssymmetrisch ausgebildet sind.

Der Vorteil von nicht-rotationssymmetrischen Phasenplatten liegt darin, dass damit kubische Anteile realisiert werden können.

Rotationssymmetrische Phasenplatten werden durch Polynome mit geraden Potenzen der radialen Ortsvariablen beschrieben. Eine laterale Verschiebung von rotationssymmetrischen Phasenplatten ist daher in ihrer Gesamtwirkung zu Phasenplatten äquivalent, deren Polynom neben kubischen Anteilen auch Anteile enthält, die von der Azimutkoordinate abhängen. Diese Abhängigkeit führt zu nicht erwünschten nichtkubischen Polynomanteilen.

Es ist somit möglich, dass mit der erfindungsgemäßen Vorrichtung eine kubische Phasenplatte, welche im Stand der Technik eingesetzt wird, durch die erfindungsgemäße adaptive Phasenplatte mit adaptiver Steigung ersetzt werden kann. Diese kann dementsprechend der gegebenen Situation angepasst werden.

Ein weiterer Vorteil der Ausgestaltung der Erfindung liegt darin, dass die zwei optischen Platten, welche lateral in x-Richtung verschiebbar angeordnet sind, in ihrer Form zylinderähnlich ausgeführt sind, wobei eine erste Fläche plan und eine zweite Fläche durch die Funktion $f(x,y) = \kappa \cdot x^4$ beschreibbar sind, wobei die zwei optischen Platten, welche lateral in y-Richtung verschiebbar angeordnet sind, in ihrer Form zylinderähnlich ausgeführt sind, wobei eine erste Fläche plan und eine zweite Fläche durch die Funktion $f(x,y) = -\kappa \cdot y^4$ beschreibbar sind.

Die erste und zweite Phasenplatte sind auf ihrer ersten Seite plan und werden auf ihrer zweiten Seite durch die Funktion $f(x,y) = \kappa \cdot x^4$ beschrieben. Die dritte und vierte Phasenplatte sind ebenfalls auf ihrer ersten Seite plan und werden auf ihrer zweiten Seite durch das Polynom $\kappa \cdot y^4$ beschrieben. Die resultierende Wirkung des Gesamtsystems der vier Phasenplatten ist die gleiche wie die einer festen Phasenplatte mit kubischem Flächenverlauf aus dem Stand der Technik.

Damit kann nun erfindungsgemäß effektiv die Wirkung einer kubischen Phasenplatte mit variabler Stärke mit hoher Genauigkeit realisiert werden. Es ist weiterhin möglich, die komplementären Eigenschaften "Schärfentiefe" und "Kontrast" situationsgerecht zu optimieren.

Eine alternative vorteilhafte Ausgestaltung der Erfindung ist unter Anspruch 7 dargelegt.

Eine gleiche vorteilhafte Wirkung, wie vorhergehend beschrieben, kann ebenfalls mit nur zwei Phasenplatten erzielt werden. Die zwei optischen Phasenplatten sind in entgegengesetzter Richtung zueinander längs ihrer Diagonalen verschiebbar angeordnet, wobei diese jeweils gleichzeitig um den gleichen Betrag gegeneinander verschoben werden.

Hiermit ist es nun ebenso möglich, die Schärfentiefe und den Kontrast situationsgerecht einzustellen bzw. zu optimieren.

Die Aufgabe der Erfindung wird des weiteren durch die Merkmale des Anspruches 12 zur Herstellung derartiger Phasenplatten gelöst.

Mit einem erfindungsgemäßen derartigen Verfahren ist es einfach und schnell möglich, Flächen mit derartigen, bereits erwähnten, Funktionen zu versehen, um in ihrer Gesamtheit eine adaptive Phasenplatte mit kubischem Phasenverlauf herstellen zu können.

Weiterhin wird in vorteilhafter Weise eine Vorrichtung zum Verschieben von zwei Phasenplatten aufgezeigt, welche einen relativ leichten Aufbau aufweist und einen unkomplizierten Verschiebungsmechanismus gewährleistet.

Vorteilhafte Ausgestaltungen und Weiterbildungen der Erfindung ergeben sich aus den weiteren Unteransprüchen und den nachfolgend anhand der Zeichnung prinzipmäßig beschriebenen Ausführungsbeispielen.

Es zeigt:

Figur 1        eine prinzipmäßige Darstellung einer Oberfläche einer kubischen Phasenplatte nach dem Stand der Technik;

Figur 2        eine prinzipmäßige Darstellung einer konkaven Oberfläche einer erfindungsgemäßen Phasenplatte;

Figur 3        eine prinzipmäßige Darstellung einer konvexen Oberfläche einer erfindungsgemäßen Phasenplatte;

Figur 4a       eine prinzipmäßige Darstellung einer erfindungsgemäßen 4-Phasenplattenanordnung in der Draufsicht;

Figur 4b und 4c    prinzipmäßige Darstellungen der in Figur 4a aufgezeigten 4-Phasenplattenanordnung in der Seitenansicht;

Figur 5        eine prinzipmäßige Darstellung der in den Figuren 4a bis 4c aufgezeigten 4-Phasenplattenanordnung im Strahlengang;

Figur 6        eine prinzipmäßige Darstellung einer Wellenfront der erfindungsgemäßen 4-Phasenplattenanordnung für $\Delta = 0$, welche die Restfehler aufzeigt;

Figur 7        eine prinzipmäßige Darstellung einer kubischen Wellenfront der erfindungsgemäßen 4-Phasenplattenanordnung für $\Delta > 0$;

Figur 8        Darstellung der Pfeilhöhe einer Wellenfront nach Figur 6 am Pupillenrand in Wellenlängen in Abhängigkeit von der Verschiebung der Phasenplatten;

Figur 9        eine prinzipmäßige Darstellung einer konvexen Oberfläche einer alternativen erfindungsgemäßen Phasenplatte;

Figur 10       eine prinzipmäßige Darstellung einer konkaven Oberfläche einer alternativen erfindungsgemäßen Phasenplatte;

Figur 11a      eine prinzipmäßige Darstellung einer alternativen erfindungsgemäßen 2-Phasenplattenanordnung mit Phasenplatten nach den Figuren 9 und 10 in der Draufsicht;

Figur 11b      eine prinzipmäßige Darstellung einer alternativen erfindungsgemäßen 2-Phasenplattenanordnung mit Phasenplatten nach den Figuren 9 und 10 in der Seitenansicht;

Figur 12        eine schematische Anordnung der 2-Phasenplattenanordnung nach den Figuren 11a und 11b im Strahlengang;

Figur 13        eine prinzipmäßige Darstellung einer Wellenfront der erfindungsgemäßen 2-Phasenplattenanordnung für $\Delta = 0$, welche die Restfehler aufzeigt;

Figur 14        eine prinzipmäßige Darstellung einer kubischen Wellenfront der erfindungsgemäßen 2-Phasenplattenanordnung für $\Delta > 0$;

Figur 15        Darstellung der Pfeilhöhe einer Wellenfront am Pupillenrand der Wellenlängen in Abhängigkeit von der Verschiebung der zwei Phasenplatten;

Figur 16        eine prinzipmäßige Darstellung einer erfindungsgemäßen Vorrichtung zur Herstellung von nicht-rotationssymmetrischen Phasenplatten; und

Figur 17        eine prinzipmäßige Darstellung einer erfindungsgemäßen Vorrichtung zum Verschieben von Phasenplatten.

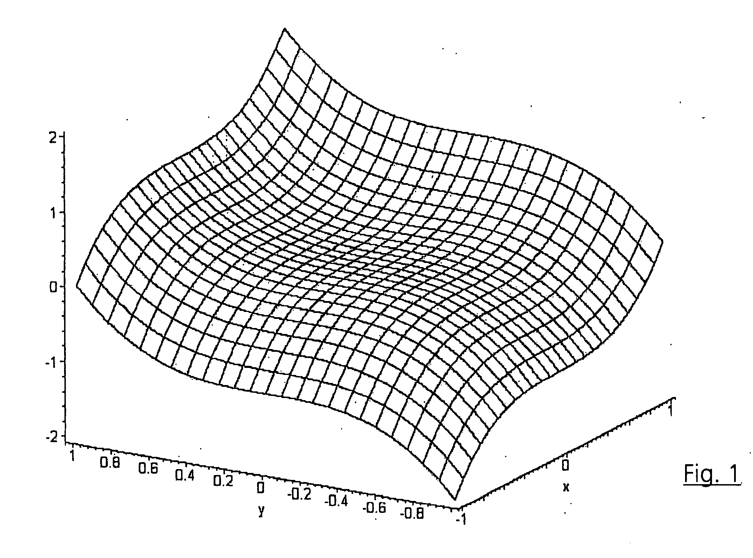

Um eine möglichst hohe Schärfentiefe zu erreichen, werden beim Stand der Technik, wie in Figur 1 dargestellt, feste Phasenplatten mit kubischem Phasenverlauf eingesetzt. Hierbei ist jeweils eine erste Fläche plan ausgeführt (nicht dargestellt) und eine zweite Fläche wird durch ein kubisches Polynom $f(x,y) = \alpha(x^3+y^3)$ beschrieben, wobei die kubische Oberfläche der Phasenplatte in Figur 1 deutlich aufgezeigt ist.

Das Verhalten von optischen Systemen mit derartigen Phasenplatten bei einer Defokussierung ist insbesondere in den Schriften WO 96/24085 und WO 99/57599 eingehend beschrieben. Aus diesem Grunde wird hier nicht näher auf die Wirkungsweise von Phasenplatten eingegangen.

Erklärungswürdig ist hier jedoch der Faktor $\alpha$ in der bereits genannten Funktion, welcher die Stärke der kubischen Form der Fläche bestimmt. Es ist hier demzufolge eine Proportionalität zwischen dem Faktor $\alpha$ und der Schärfentiefe gegeben, was bedeutet, dass bei Anstieg des Wertes $\alpha$ ebenfalls ein Anstieg der Schärfentiefe zu erwarten ist. Da sich aber mit zunehmendem Faktor $\alpha$ gleichzeitig die Modulationsübertragungsfunktion (MTF) verschlechtert, muss bisher der Kontrast eines digitalen Bildes durch Kontrastanhebung erhöht bzw. verbessert werden. Dies kann durch inverse Digitalfilter geschehen. Das hat aber zur Folge, dass dadurch das Rauschsignal angehoben wird.

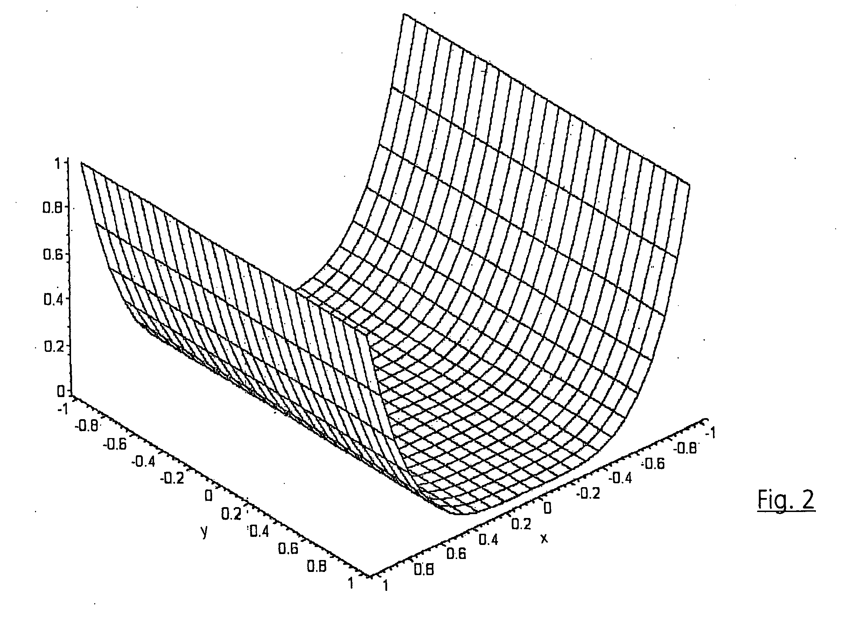

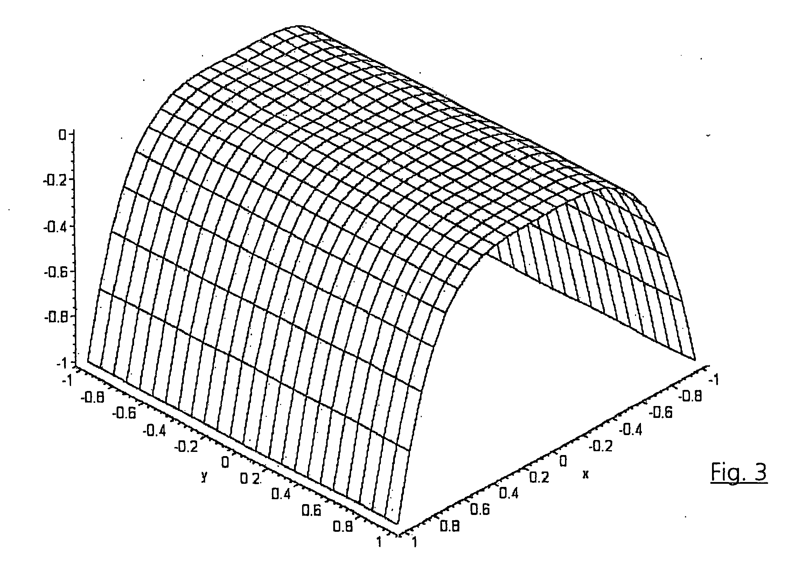

Um die nun beschriebenen Mängel einer festen kubischen Phasenplatte zu vermeiden, werden erfindungsgemäß vier Phasenplatten verwendet, wobei in Figur 2 eine konkave Fläche bei einer ersten Phasenplatte 1 dargestellt ist. Die Oberfläche einer dritten Phasenplatte 3 ist ebenfalls konkav ausgestaltet. Die Oberflächen einer zweiten Phasenplatte 2 und einer vierten Phasenplatte 4 sind konvex, wie in Figur 3 dargestellt, ausgebildet.

Die Phasenplatten 1 und 2 sind auf ihrer ersten Seite plan ausgeführt und werden auf ihrer konkaven bzw. konvexen Oberfläche durch die Funktion

$$f(x,y) \;=\; \kappa \cdot x^4$$

beschrieben. Die Phasenplatten 3 und 4 sind ebenfalls auf ihrer ersten Oberfläche plan ausgeführt und werden auf den konkaven oder konvexen Oberflächen durch die Funktion

$$f(x,y) \;=\; \kappa \cdot y^4$$

beschrieben. Die Phasenplatten 1, 2, 3 und 4 sind in ihrer Form zylinderähnlich und nicht-rotationssymmetrisch ausgeführt.

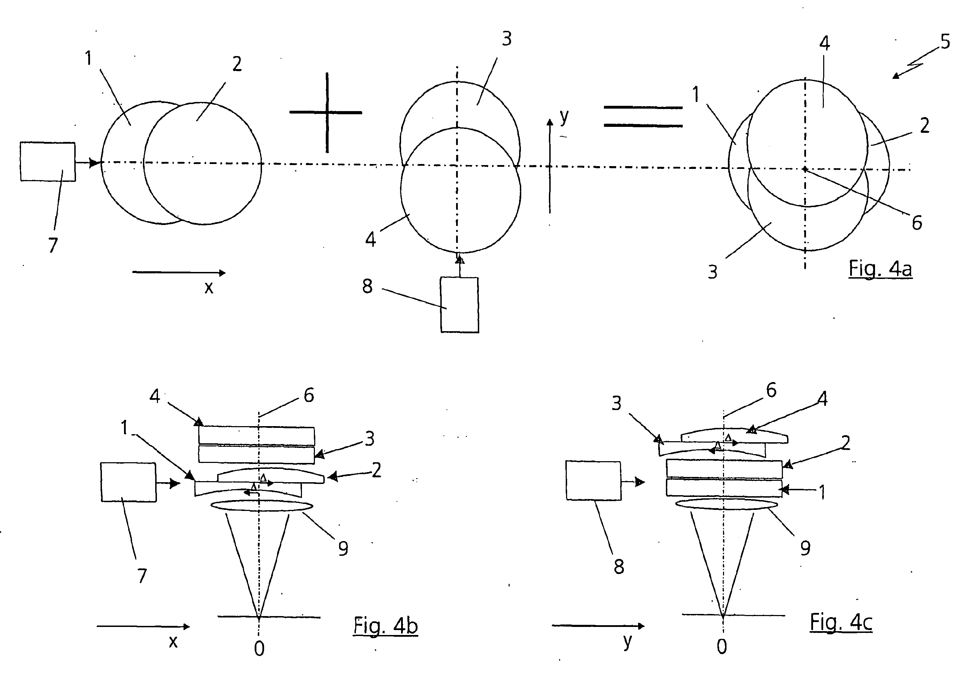

In Figur 4a ist eine 4-Phasenplattenanordnung 5 in vereinfachter Art dargestellt. Die Phasenplatten 1 und 2 können in x-Richtung jeweils senkrecht zu einer optischen Achse 6, welche aus der Zeichnungsebene heraustritt, verschoben werden. Die Verschiebung der zwei Phasenplatten 1 und 2 sollte gleichzeitig und in entgegengesetzter Richtung zueinander erfolgen, damit keine Bildverschlechterung eintritt. Die Phasenplatte 1 wird somit um den gleichen Betrag $\Delta$ in negativer x-Richtung wie die Phasenplatte 2 in positiver x-Richtung verschoben.

Die Phasenplatten 3 und 4 können in y-Richtung ebenfalls relativ zueinander verschoben werden, wobei die Phasenplatte 3 und 4, welche ebenfalls wie die Phasenplatten 1 und 2 zueinander parallel angeordnet sind, gegenüber den Phasenplatten 1 und 2 um 90° gedreht angeordnet sind. Hierbei wird die Phasenplatte 3 um den gleichen Betrag $\Delta$ in negativer y-Richtung wie die Phasenplatte 4 in positiver y-Richtung verschoben. In diesem Ausführungsbeispiel sind die Phasenplatten 1 und 2 sowie die Phasenplatten 3 und 4 bereits, wie erkennbar, gegeneinander verschoben.

Die resultierende Wirkung des Gesamtsystems der vier Phasenplatten 1, 2, 3 und 4 ist die gleiche wie die einer festen Phasenplatte mit kubischem Flächenverlauf $f(x, y) = \alpha(x^3+y^3)$, wie aus dem Stand der Technik bekannt.

Bei Einsatz der zylinderähnlichen Phasenplatten 1, 2, 3 und 4 in einem optischen System sollte der Abstand der Phasenplatten 1, 2, 3 und 4 zueinander so gering wie möglich sein. Ebenfalls sollten die Phasenplatten 1, 2, 3 und 4 dünne Phasenplatten darstellen, welche beispielsweise auch direkt aufeinander gleiten können. Wichtig ist, dass der Abstand der Phasenplatten 1, 2, 3 und 4 zueinander gegenüber der Dicke der Phasenplatten 1, 2, 3 und 4 relativ klein ist.

Ebenso sollten die Phasenplatten 1, 2, 3 und 4 aus einem festen und transparenten Material bzw. Werkstoff hergestellt sein. Diesbezüglich können die Phasenplatten 1, 2, 3 und 4 als Glasplatten oder ebenso auch als Kunststoffplatten ausgeführt sein.

Mit der Verschiebung $\Delta$, wie in den Figuren 4b und 4c dargestellt, gilt für die Flächenfunktionen der einzelnen Phasenplatten 1, 2, 3 und 4:

$$\text{Phasenplatte 1:} \qquad f(x,y) = \kappa(x-\Delta)^4$$

$$\text{Phasenplatte 2:} \qquad f(x,y) = -\kappa(x+\Delta)^4$$

$$\text{Phasenplatte 3:} \qquad f(x,y) = \kappa(y-\Delta)^4$$

$$\text{Phasenplatte 4:} \qquad f(x,y) = -\kappa(y+\Delta)^4.$$

Die Wirkung der vier Phasenplatten 1, 2, 3 und 4 ist äquivalent zu

$$f(x,y) = \kappa(x-\Delta)^4 - \kappa(x+\Delta)^4 + \kappa(y-\Delta)^4 - \kappa(y+\Delta)^4 \qquad (1)$$

$$= 8\kappa\Delta(x^3+y^3) + 8\Delta^3\kappa(x+y). \qquad (2)$$

Mit $\alpha = 8\kappa\Delta$ kann nun der kubische Parameter $\alpha$ über die Verschiebung $\Delta$ eingestellt werden. Der lineare Term in Gleichung 2 führt lediglich zu einer Bildverschiebung und nicht zu einer Bildverschlechterung. Die Bildverschiebung kann aber mit Mitteln des Standes der Technik, wenn gewünscht, ausgeglichen werden.

Mit einem Stellelement 7 können die Phasenplatten 1 und 2 in x-Richtung, beispielsweise mit Hilfe von piezokeramischen Antrieben, relativ zueinander verschoben werden. Nachfolgend wird das Stellelement 7 als x-Aktuator bezeichnet. Mit einem Stellelement 8 können die Phasenplatten 3 und 4 in y-Richtung ebenfalls mit Hilfe von beispielsweise piezokeramischen Antrieben relativ zueinander verschoben werden. Im Nachfolgenden wird das Stellelement 8 als y-Aktuator bezeichnet. Selbstverständlich wäre es auch möglich, die Aktuatoren 7 und 8 manuell oder mit anderen Bewegungsantrieben zu betreiben.

In Figur 4b und 4c sind die Phasenplatten 1, 2, 3 und 4 in einer Seitenansicht dargestellt. Jeweils zwischen einem Objekt O und den Phasenplatten 1, 2, 3 und 4 ist entlang der optischen Achse 6 ein Objektiv 9 angeordnet. Die Phasenfilter 1, 2, 3 und 4 sind in der Pupillenebene des abbildenden Objektives 9 angeordnet. Dadurch verschlechtert sich zunächst die Modulationsübertragungsfunktion (MTF) für einen großen Defokussierungsbereich. Die Nullstellen der Modulationsübertragungsfunktion können aber durch die Phasenmasken bzw. Phasenplatten beseitigt werden, so dass eine eindeutige rechnerische Rücktransformation an Bilddaten möglich ist. Somit kann schließlich ein Bild mit hoher Schärfentiefe erzeugt werden.

In Figur 4b ist noch einmal deutlich aufgezeigt, in welche Richtung die Phasenplatten 1 und 2 gegeneinander verschoben werden. Die Phasenplatten 3 und 4 sind in diesem Ausführungsbeispiel nicht mit berücksichtigt. Die Verschiebung $\Delta$ gibt die jeweilige Verschiebung der Phasenplatten 1 und 2 gegenüber der optischen Achse 6 an. In Figur 4c ist die Verschiebung $\Delta$ der Phasenplatten 3 und 4 deutlich dargestellt.

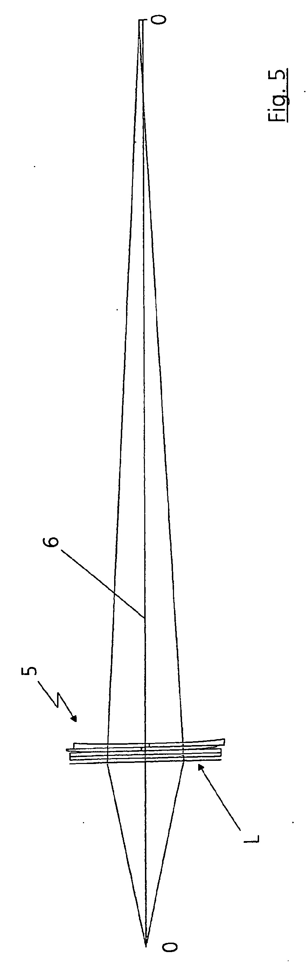

In Figur 5 ist beispielhaft die erfindungsgemäße 4-Phasenplattenanordnung 5 im Strahlengang dargestellt. In Lichtrichtung gesehen, ist vor der erfindungsgemäßen 4-Phasenplattenanordnung 5 eine ideale Linse L auf der optischen Achse 6 angeordnet.

Die numerische Apertur der Optik beträgt in diesem Ausführungsbeispiel 0,2. der Brechungsindex der Phasenplatten 1, 2, 3 und 4 beträgt 1.5. Hierbei ist eine Wellenlänge $\lambda$ von 0,4 $\mu$m vorgesehen. Die Objektweite beträgt 10 mm und die Bildweite 40 mm. Die Phasenplatten 1, 2, 3 und 4 werden jeweils um 0,2 mm in x-Richtung wie auch in y-Richtung von der optischen Achse 6 in seitliche Richtung verschoben. Durch die Funktion $80 \cdot 10^{-4} \text{mm}^{-3} \cdot x^4$ können die erfindungsgemäßen Phasenplatten 1, 2, 3 und 4 beschrieben werden. Die Einheit von dem Parameter x ist ebenfalls mm. Die von der 4-Phasenplattenanordnung 5 verursachte Form einer Wellenfront in einer Austrittspupille unterscheidet sich um weniger als $0,12\lambda$ (Wellenlängen) von einer Wellenfront, welche durch die nach dem Stand der Technik eingesetzte kubische Phasenplatte mit $64 \cdot 10^{-4} \text{mm}^{-2} \cdot (x^3 + y^3)$ erzeugt wird. Hier ist ebenfalls die Einheit von x und y mm. Nach dieser Aussage ist eindeutig zu erkennen, dass mit der erfindungsgemäßen 4-Phasenplattenanordnung 5 die Wirkung einer vorgegebenen kubischen Phasenplatte mit beliebiger Stärke mit der erforderlichen Genauigkeit erzielt werden kann.

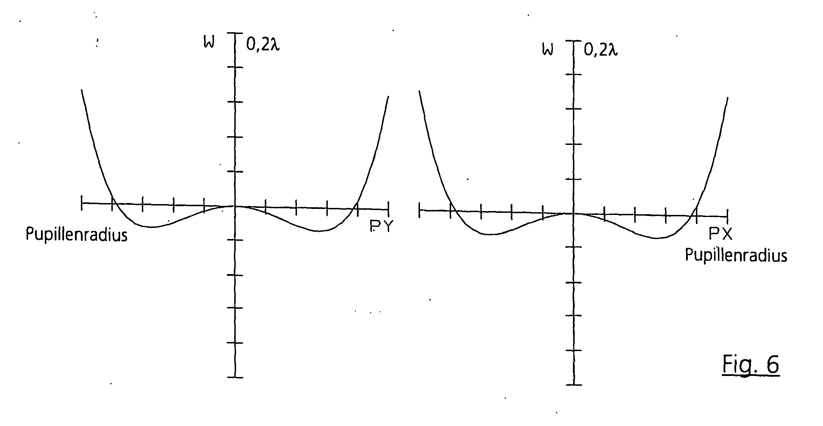

Figur 6 zeigt die Wellenfront der 4-Phasenplattenanordnung 5 bei einer Verschiebung 0. Der durch die Phasenplatten 1, 2, 3 und 4 verursachte Restfehler beträgt in diesem Ausführungsbeispiel weniger als $0,12\lambda$. Die hier dargestellten graphischen Funktionen zeigen die Abweichung der Wellenfront in der Austrittspupille des optischen Systems von einer idealen Wellenfront in zwei Schnitten (jeweils Schnitt längs der x-Achse bzw. der y-Achse). Die ideale Wellenfront ist eine Kugelfläche, auch als Gaußsche Referenzsphäre bekannt, deren Mittelpunkt der Schnittpunkt des Hauptstrahles mit der Bildebene ist (Gaußscher Bildpunkt). Die Abweichung der Wellenfront von der idealen Wellenfront wird bezüglich des Rayleigh-Kriteriums bzw. der Rayleigh-Grenze beurteilt und analysiert. Demnach gilt ein Objektiv als beugungsbegrenzt, wenn die Abweichung der Wellenfront von der Gaußschen Referenzsphäre kleiner als eine viertel Wellenlänge ist. Die Wellenfrontabweichung laut Abbildungsbeispiel liegt hier mit $0,12\lambda$ weit darunter. Somit machen sich die Abbildungsfehler des optischen Systems in der Bildqualität nicht verschlechternd bemerkbar. Die Wellenfront der 4-Phasenplattenoptik 5 weicht von der Wellenfront, welche durch eine kubische feste Phasenplatte erzeugt wird, um weniger als 0,2 Wellenlängen ab. Wie bei der kubischen festen Phasenplatte ändert sich die Punktbildfunktion auch bei der 4-Phasenplattenoptik 5 über einen weiten Defokussierungsbereich nicht.

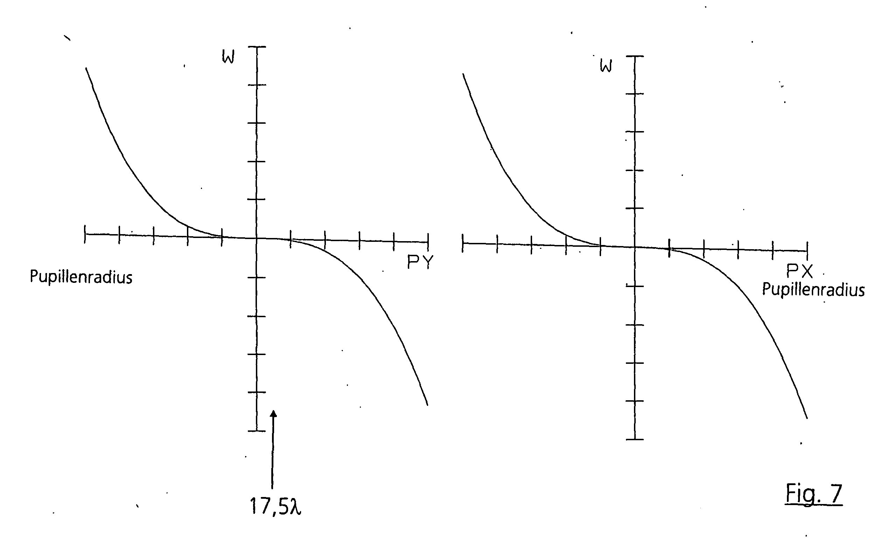

In Figur 7 ist die 4-Phasenplattenanordnung 5, welche adaptiv einen kubischen Phasenverlauf erzeugen kann, für eine kubische Wellenfront mit $\pm 17,5\lambda$ am Pupillenrand dargestellt. Während man mit der kubischen festen Phasenplatte in der Wirkung festliegt, kann die 4-Phasenplattenanordnung 5 frei eingestellt werden, was zu einer vereinfachten und schnellen Realisierung eines kubischen. Phasenverlaufs führt. Es kann die kubische Wellenfront mit $\pm 17,5$ Wellenlängen am Pupillenrand erhalten werden, wenn in der erfindungsgemäßen optischen 4-Phasenplattenanordnung 5 die Phasenplatten 1, 2, 3 und 4 jeweils um 0,5 mm gegeneinander bzw. seitlich zur optischen Achse 6 verschoben werden.

Somit ergibt sich der wesentlichste Vorteil, nämlich dass durch das Verschieben der Phasenplatten 1, 2, 3 und 4 eine beliebige kubische Phasenplatte erzeugt werden kann. Je nach Größe der Verschiebung $\Delta$ der Phasenplatten 1, 2, 3 und 4 können verschiedene kubische Wellenfronten, beispielsweise $\pm 35\lambda$ oder $\pm 17,5\lambda$ oder $\pm 8,75\lambda$ erzeugt werden.

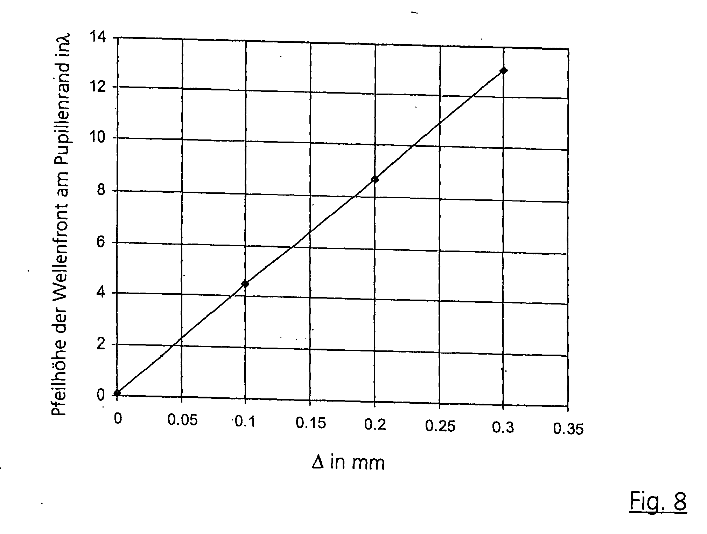

Figur 8 stellt die Pfeilhöhe der Wellenfront am Pupillenrand in Wellenlängen für die 4-Phasenplattenanordnung 5 des Ausführungsbeispiels nach Figur 7 als Funktion der Verschiebung $\Delta$ der Phasenplatten 1, 2, 3 und 4 relativ zur optischen Achse 6 dar. Der Zusammenhang der Pfeilhöhe und der Verschiebung $\Delta$ bzw. der Funktion daraus ist linear, also ist die Pfeilhöhe der Wellenfront proportional zur Verschiebung der Phasenplatten 1, 2, 3 und 4. Dies bedeutet, je größer die Verschiebung $\Delta$, umso größer wird die kubische Wellenfront.

Eine alternative Ausführung zu der 4-Phasenplattenanordnung 5 stellt die folgende Möglichkeit dar.

Die gleiche Wirkung der vier Phasenplatten 1, 2, 3 und 4 mit zylinderähnlicher Form kann ebenso durch nur zwei Phasenplatten 10 und 11, welche durch die Form

$$f(x,y) = x^4 + y^4$$

beschrieben werden, erzielt werden.

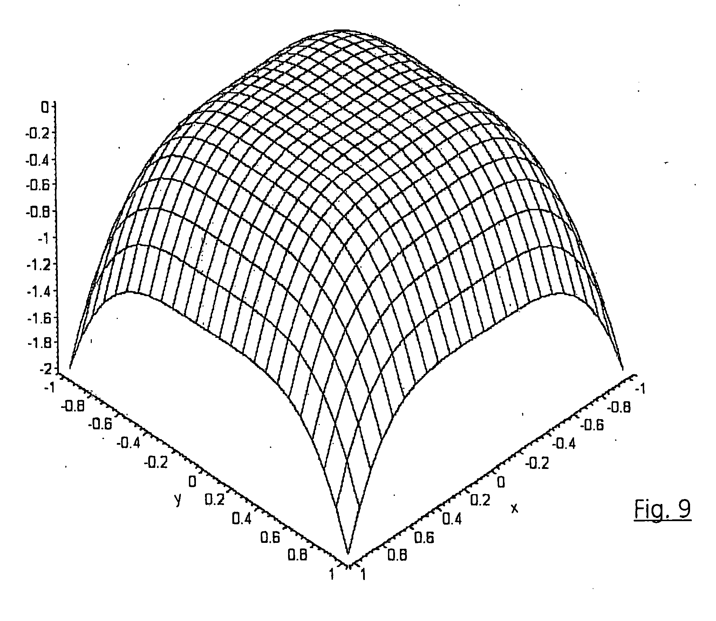

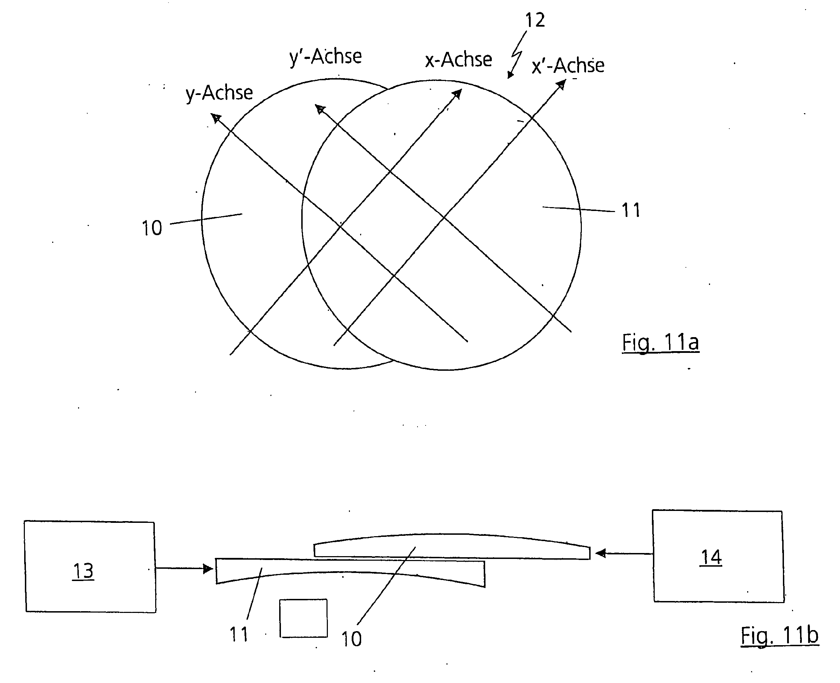

In Figur 9 ist eine konvexe Oberfläche der Phasenplatte 10 einer 2-Phasenplattenoptik 12, welche in Figur 11a deutlicher aufgezeigt werden, dargestellt. Die Phasenplatte 10 ist ebenfalls wie die vier Phasenplatten 1, 2, 3 und 4 der 4-Phasenplattenanordnung 5 nicht-rotationssymmetrisch ausgebildet. Der Unterschied zu den vier Phasenplatten 1, 2, 3 und 4 besteht jedoch darin, dass diese nicht zylinderähnlich ausgeführt ist, sondern im Freiformflächendesign ausgestaltet wird.

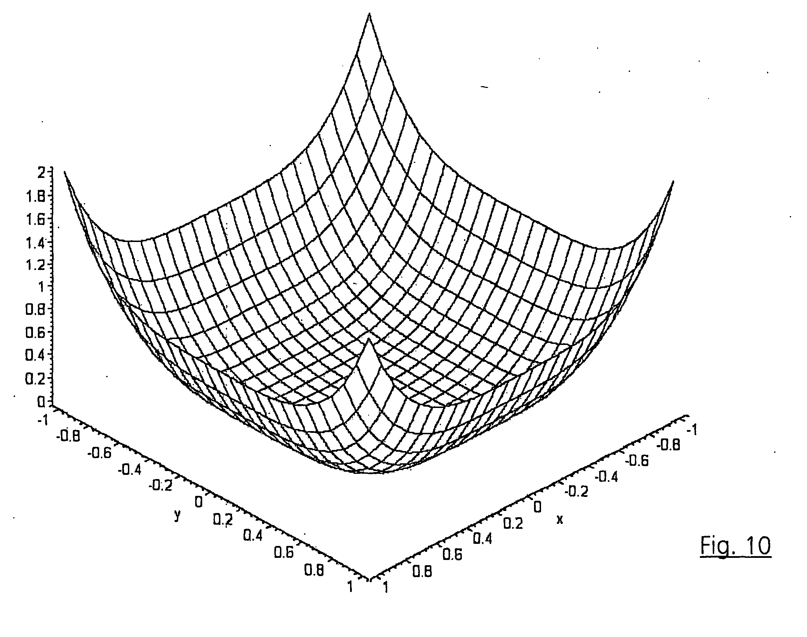

Figur 10 zeigt hingegen die zweite Phasenplatte 11 der 2-Phasenplattenoptik 12, welche eine konkave Oberfläche aufweist. Diese ist ebenfalls nicht-rotationssymmetrisch und im Freiformflächendesign ausgeführt. Beide Phasenplatten 10 und 11 sind wie die Phasenplatten 1, 2, 3 und 4 asphärisch gestaltet.

Die vier Phasenplatten 1, 2, 3 und 4 werden durch die erfindungsgemäßen folgenden beiden Phasenplatten 10 und 11 ersetzt:

$$f(x,y) = \kappa(x^4+y^4)$$

$$f(x,y) = -\kappa(x^4+y^4).$$

In den Figuren 11a und 11b ist eine schematische Anordnung der 2-Phasenplattenoptik 12 näher dargestellt.

Es ist jeweils nur eine x-Achse und eine y-Achse aufgezeigt, da jeweils die zwei Phasenplatten 10 und 11 identisch sind. Somit sind die beiden Phasenplatten 10 und 11 symmetrisch zur x- und y-Achse. Beide Phasenplatten 10 und 11 werden gegeneinander um die Verschiebung $\Delta$ längs ihrer Diagonalen verschoben. Das bedeutet, dass die Verschiebung $\Delta$ der beiden Phasenplatten 10 und 11 voneinander in 45° zur x-Achse erfolgt. Hierbei kommt es zu einer Verschiebung der x- und y-Achse, wobei x'- und y'-Achsen entstehen.

Die resultierende Wirkung der beiden Phasenplatten 10 und 11 ist äquivalent zu

$$f(x,y) = \kappa[(x-\Delta)^4+(y-\Delta)^4-(x+\Delta)^4-(y+\Delta)^4]$$

oder

$$f(x,y) = \kappa(8x^3\Delta+8x\Delta^3+8y^3\Delta+8y\Delta^3)$$

$$= 8\kappa\Delta(x^3+y^3)+8\kappa\Delta^3(x+y)$$

Eine Seitenansicht der 2-Phasenplattenanordnung 12 ist in Figur 11b dargestellt. Hier ist deutlich die konvexe Oberfläche der Phasenplatte 10 und die konkave Oberfläche der Phasenplatte 11 zu erkennen. Die erfindungsgemäßen zwei Phasenplatten 10 und 11 können ebenfalls wie die 4-Phasenplattenanordnung 5 über Stellelemente 13 und 14 bewegt bzw. verschoben werden. Derartige Stellelemente oder Aktuatoren 13 und 14 können selbstverständlich Piezoantriebe, manuelle Antriebe oder auch andere Bewegungsantriebe darstellen.

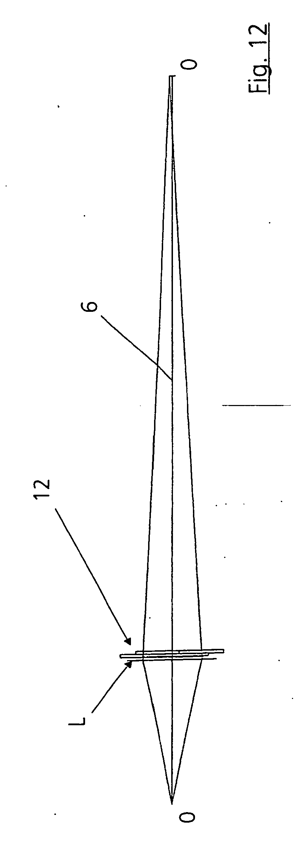

In Figur 12 ist ein Ausführungsbeispiel der 2-Phasenplattenanordnung 12 aufgezeigt, wie diese beispielsweise im Strahlengang eines optischen Systems auf der optischen Achse 6 angeordnet sein kann. Die numerische Apertur der Optik dieses Ausführungsbeispiels beträgt 0,2. Der Brechungsindex der Phasenplatten 10 und 11 beträgt 1.5. Die Wellenlänge $\lambda$ beträgt hier 0,4 $\mu$m. Die Objektweite dieses Ausführungsbeispiels ist mit 10 mm und die Bildweite 40 mm angegeben. Die Phasenplatten 10 und 11 sind um 0,5 mm jeweils von der optischen Achse 6 in seitlicher Richtung verschoben. Ebenfalls sind die beiden Phasenplatten 10 und 11 gegeneinander um 90° verdreht angeordnet und können durch die Funktion $32 \cdot 10^{-4}\text{mm}^{-2} \cdot (x^4+y^4)$) beschrieben werden. Die Einheit der Parameter x und y ist hier ebenfalls mm.

Die von der 2-Phasenplattenanordnung 12 verursachte Form der Wellenfront in der Austrittspupille unterscheidet sich von der, welche durch die nach dem Stand der Technik eingesetzte feste kubische Phasenplatte mit $64 \cdot 10^{-4}\text{mm}^{-2} \cdot (x^3+y^3)$ erzeugt wird, wie bereits bei der 4-Phasenplattenanordnung 5 erkennbar, um weniger als $0,2\lambda$. Diese Aussage macht ebenfalls deutlich, dass die 2-Phasenplattenanordnung 12 vorteilhaft die Schärfentiefe und den Kontrast situationsgerecht optimieren kann.

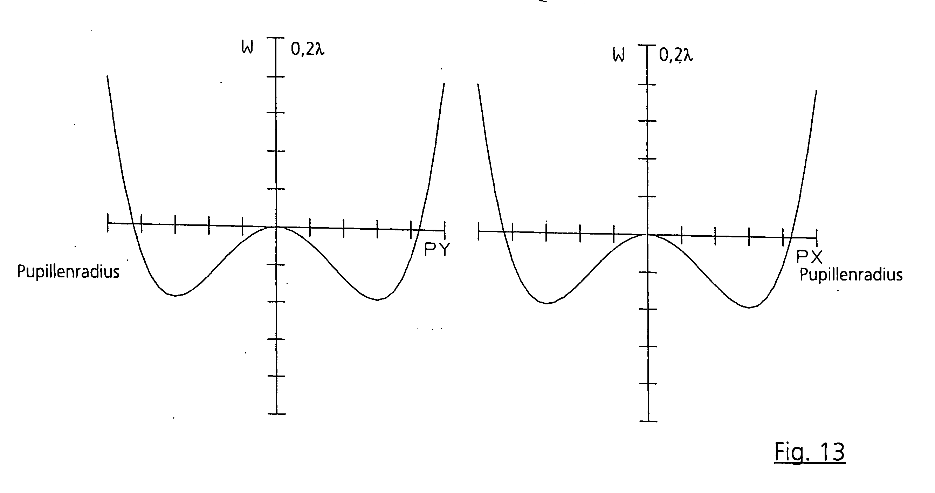

In Figur 13 ist die Wellenfront der 2-Phasenplattenanordnung 12 dargestellt. Die relative Verschiebung Δ der Phasenplatte 10 und 11 beträgt hier 0. Der Restfehler, welcher auftritt, ist vernachlässigbar klein. Ebenfalls ist der Restfehler der 2-Phasenplattenanordnung 12 gegenüber der 4-Phasenplattenanordnung 5 deutlich kleiner.

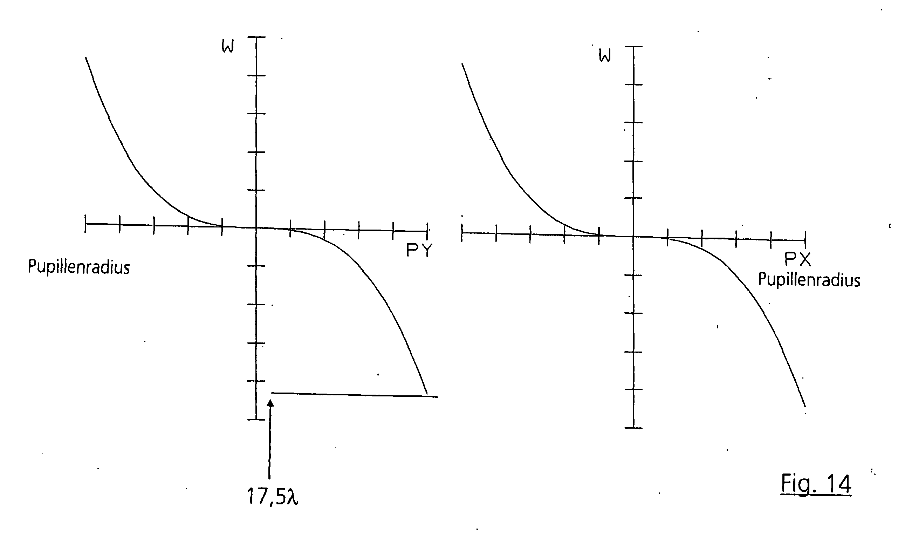

In Figur 14 ist prinzipmäßig die kubische Wellenfront der 2-Phasenplattenanordnung 12 für einer Verschiebung Δ > 0. Wie hier deutlich erkennbar ist, gleicht sich diese Darstellung der Darstellung unter Figur 7. Demzufolge gelten auch hier die Schlussfolgerungen, welche unter Figur 7 dargelegt wurden.

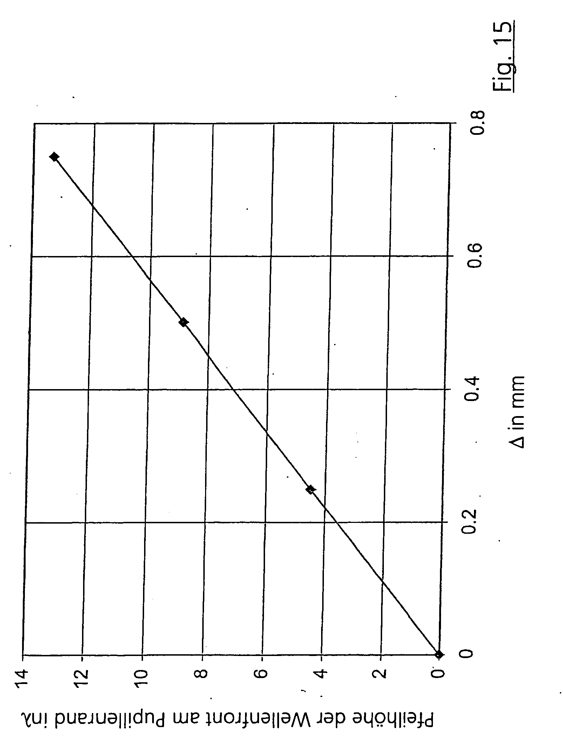

In Figur 15 ist die Pfeilhöhe der Wellenfront am Pupillenrand in Wellenlängen für die erfindungsgemäße 2-Phasenplattenanordnung 12 des in Figur 13 aufgeführten Ausführungsbeispiels als Funktion der Verschiebung Δ der Phasenplatten 10 und 11 relativ zu der optischen Achse 6 dargestellt. Wie auch hier zu erkennen ist, wie in Figur 8 schon aufgezeigt, ist die Funktion linear. Dies bedeutet, dass auch bei der 2-Phasenplattenanordnung 12 die Pfeilhöhe der Wellenfront proportional zur Verschiebung der Phasenplatten 10 und 11 ist.

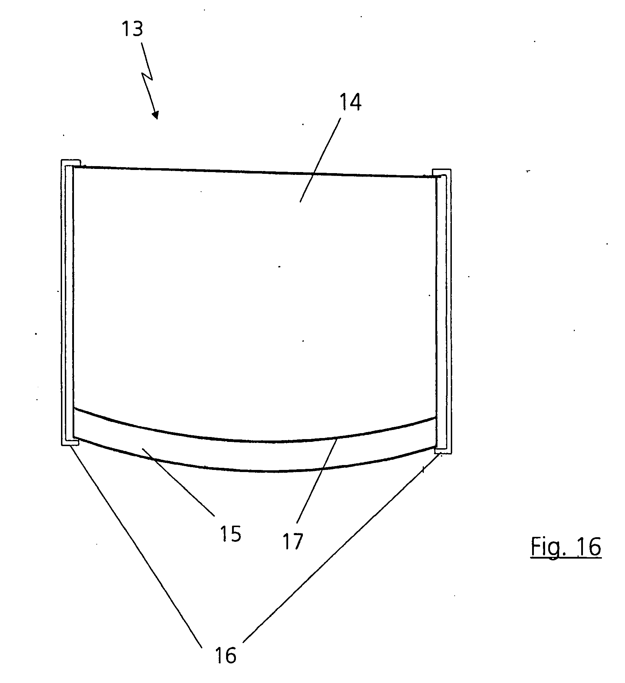

Des weiteren wird erfindungsgemäß ein Verfahren zur Herstellung von derartigen Phasenplatten 1, 2, 3, 4, 10 und 11 beansprucht. Das erfindungsgemäße Verfahren in Verbindung mit einer Vorrichtung 13 ist näher unter Figur 16 dargestellt. Hierbei besteht die Vorrichtung 13 aus einer Metallaufnahmeeinrichtung 14 zur Aufnahme einer Platte 15, welche zur Phasenplatte ausgebildet werden soll. Des weiteren beinhaltet die Vorrichtung 13 eine Spanneinrichtung 16 zur Halterung bzw. Spannung der Platte 15 an die Metallaufnahmeeinrichtung 14. Die Metallaufnahmeinrichtung 14 wie auch die Spanneinrichtung 16 bedürfen keiner speziellen Ausführung, wobei die Spanneinrichtung 16 vier Stellen aufweisen sollte, damit die Platte 15 an der Metallaufnahmeinrichtung 14 direkt anliegt oder in einer definierten relativen Lage zu der Metallaufnahmeinrichtung 14 eingespannt werden kann.

Zunächst kann beispielsweise mit einer CNC-gesteuerten Fräsmaschine die metallische Aufnahmeinrichtung 14 hergestellt werden, deren eine Fläche durch die Funktion $f(x,y) = \kappa \cdot x^4$ beschrieben wird. Die Fläche, welche durch die Funktion beschrieben wird, sollte eine Aufnahmefläche 17 zur Aufnahme der Platte 15 sein. Die Platte 15, welche beispielsweise eine Glasplatte oder eine Kunststoffplatte darstellt, sollte transparent und fest ausgeführt sein. Diese wird danach auf die Aufnahmefläche 17 der Metallaufnahmeinrichtung 14 aufgelegt. Mit Hilfe der Spanneinrichtung 16 wird die Platte so gebogen, dass sie sich der Aufnahmefläche 17 mit dem Verlauf $f(x, y) = \kappa \cdot x^4$ anschmiegt. Dabei kann die Platte 15 direkt auf die Metallaufnahmeeinrichtung 14 aufgelegt werden. Es ist aber ebenso auch möglich, dass die Platte 15 über eine Zwischenschicht, beispielsweise Silikon, mit der Metallaufnahmeeinrichtung 14 bzw. der Aufnahmefläche 17 in Verbindung steht. Die Platte 15 wird auf ihrer freien Oberfläche mit Hilfe einer Poliermaschine so lange poliert bis die gebogene Platte 15 auf der vorgegebenen Fläche eben poliert ist. Danach kann die Platte 15 von der Metallaufnahmeinrichtung 14 und der Spanneinrichtung 16 getrennt werden. Nun kann sich die Platte 15 in ihre ursprüngliche Lage zurückverbiegen, so dass die Oberfläche, welche im eingespannten Zustand die Aufnahmefläche 17 der metallischen Aufnahmeinrichtung 14 berührte, im entspannten Zustand flach bzw. eben ist. Die polierte Oberfläche der Platte 15, welche im eingespannten Zustand eben poliert wurde, besitzt im stand eben poliert wurde, besitzt im entspannten Zustand die Oberflächenform, die durch die Funktion $f(x,y) = -\kappa \cdot x^4$ gegeben ist (konkave Oberfläche). Entsprechend können nun die konvexen Phasenplatten hergestellt werden, indem die metallische Aufnahmeinrichtung 14 bzw. die Aufnahmefläche 17 der metallischen Aufnahmeinrichtung 14 mit der konkaven Fläche $f(x,y) = -\kappa \cdot x^4$ versehen wird und danach die bereits erwähnten Schritte durchgeführt werden können.

Mit einer derartigen Vorrichtung 13 und diesem Herstellungsverfahren können ebenfalls die Phasenplatten 10 und 11 der 2-Phasenplattenanordnung 12 hergestellt werden. Demzufolge sollte die Aufnahmefläche 17 der metallischen Aufnahmeeinrichtung 14 mit den folgenden Funktionen beschrieben werden:

$$f(x,y) = \kappa(x^4+y^4) \quad \text{und} \quad f(x,y) = -\kappa(x^4+y^4).$$

Somit kann mit der erfindungsgemäßen Vorrichtung 13 und dem Herstellungsverfahren der Phasenplatten 1,2,3,4,10 und 11 eine einfache und relativ kostengünstige Herstellung der erfindungsgemäßen Phasenplatten 1,2,3,4,10 und 11 gewährleistet werden.

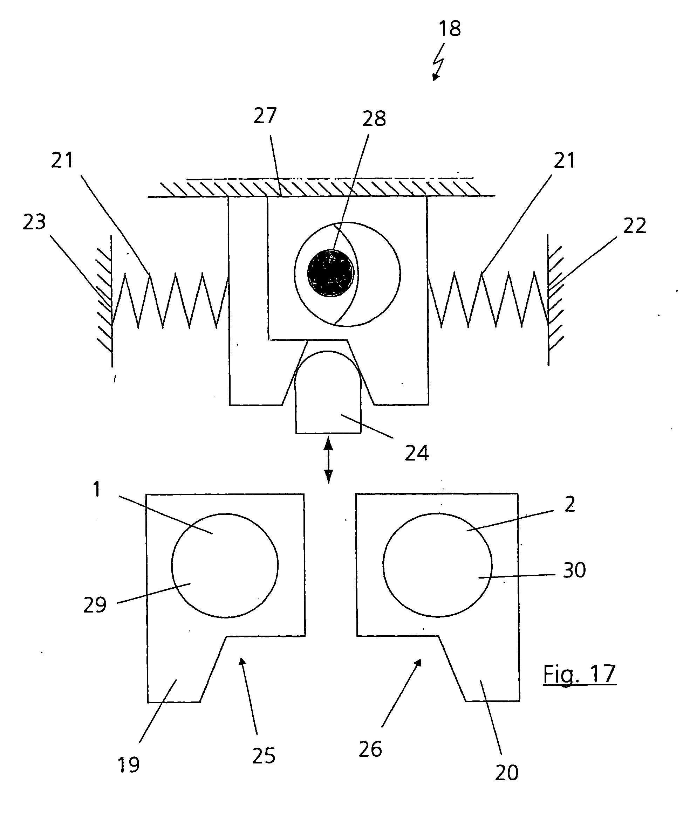

In Figur 17 ist eine Vorrichtung 18 zum Verschieben von beispielsweise nur zwei Phasenplatten dargestellt. Bei Verschiebung von den vier Phasenplatten 1,2,3 und 4 kann eine zweite Vorrichtung 18' derselben Ausführung wie bei der Verschiebung von zwei Phasenplatten benutzt werden, wobei die zweite Vorrichtung 18' senkrecht zu der ersten Vorrichtung 18 angeordnet sein sollte. Die Phasenplatten, beispielsweise 1 und 2, können jeweils in einer Mittenaussparung 29 und 30 von Halteelementen 19 und 20 gelagert werden, wobei die Mittenaussparungen 29 und 30 zum Durchlass von Lichtbündeln dienen. Die Halteelemente 19 und 20 mit denen sich darauf befindlichen Phasenplatten 1 und 2 können über Federelemente 21 gegeneinander gedrückt werden, wie aus Figur 16 erkennbar. Über Lager 22 und 23 werden die Halteelemente 19 und 20 über die Federelemente 21 verschoben. Eine Gegenkraft zu den Federkräften kann durch eine Schiebeeinrichtung 24 aufgebracht werden. Die Schiebeeinrichtung 24 kann in Aussparungen 25 und 26 der Halteelemente -19 und 20 eingeführt werden. Der Druck der Schiebeeinrichtung 24 wird von einem Lager 27 aufgenommen. Das Lager 27 dient ebenfalls zur gleichmäßigen Führung der Halteelemente 19 und 20. Die Schiebeeinrichtung 24 kann somit beispielsweise über eine Stellschraube, welche in diesem Ausführungsbeispiel nicht dargestellt ist, in der durch den Doppelpfeil gezeigten Richtung verschoben werden. Die Schiebeeinrichtung 24 kann manuell über die Stellschraube oder auch piezoelektrisch, magnetisch oder ähnlich bedienbar sein. Die Phasenplatten 1 und 2 können somit relativ zueinander um die Verschiebung $\Delta$ bewegt werden, so dass eine Apertur 28 der Optik frei bleibt. Dies bedeutet, dass die Apertur 28 der freie Durchmesser ist, der durch die Verschiebung $\Delta$ der Halteelemente 19 und 20 nicht abgedeckt wird. Die Freihaltung der Apertur 28 muss gewährleistet werden, da diese Blende den optischen Kanal des optischen Systems darstellt. Die Anordnung bzw. Vorrichtung 18 steht somit senkrecht zur optischen Achse 6. Wie bereits erwähnt, können für die 4-Phasenplattenanordnung 5 zwei derartige Vorrichtungen 18 und 18' verwendet werden, welche jeweils um 90° versetzt angeordnet sein sollten.

Die Vorrichtung 18 zum Verschieben der Phasenplatten 1 und 2 kann selbstverständlich auch in einem gewissen Rahmen vereinfacht werden, wobei aber bedacht werden sollte, dass eine gleichmäßige Verschiebung der beiden Phasenplatten 1 und 2 gegeneinander gewährleistet bleiben muss. Daher ist es selbstverständlich, dass auch andere Ausführungsformen der Vorrichtung 18 bzw. 18' möglich sein können.

Mit einer derartigen Erfindung kann nun effektiv die Wirkung einer kubischen Phasenplatte 5 oder 12 mit variabler Stärke mit hoher Genauigkeit realisiert werden. Zudem ist es nun von großem Vorteil, dass die komplementären Eigenschaften wie Schärfentiefe und Kontrast nun situationsgerecht in einem optischen System optimiert werden können.

Die erfindungsgemäßen Vorrichtungen können nicht nur in Mikroskopen, sondern ebenfalls in Sensorsystemen, Kameras, Barcodelesern oder anderen optischen Systemen eingesetzt werden, welche eine hohe Schärfentiefe benötigen bzw. bevorzugen.

**Patentansprüche**

1.    Vorrichtung zur Erhöhung der Schärfentiefe eines optischen Systems, wobei das optische System mit einem Objektiv (9) zur Lichtbündelung versehen ist, wobei vier optische Platten/Filter (1,2,3,4), insbesondere vier Phasenplatten/ Phasenfilter, in einer Pupillenebene des Objektivs (9) entlang einer optischen Achse (6) (z-Richtung) angeordnet sind, welche nicht sphärisch ausgebildet sind und als System einen kubischen Phasenverlauf aufweisen, wobei zwei optische Platten (1,2) lateral in x-Richtung und zwei optische Platten (3,4) lateral in y-Richtung verschiebbar angeordnet sind, und wobei eine relative Verschiebung $\Delta$ der jeweils zwei optischen Platten (1,2,3,4) zueinander gleichzeitig um den gleichen Betrag in jeweils lateraler Richtung zur optischen Achse (6) erfolgt.

2.    Vorrichtung nach Anspruch 1,
**dadurch gekennzeichnet, dass**
die optischen Platten (1,2,3,4) nichtrotationssymmetrisch ausgebildet sind.

3.    Vorrichtung nach einem der Ansprüche 1 oder 2,
**dadurch gekennzeichnet, dass**
die zwei optischen Platten (1,2), welche lateral in x-Richtung verschiebbar angeordnet sind, in ihrer Form zylinderähnlich ausgeführt sind, wobei jeweils eine erste Fläche plan und jeweils eine zweite Fläche durch die Funktionen $f(x,y) = \kappa \cdot x^4$ und $f(x,y) = -\kappa \cdot x^4$ beschreibbar sind.

4.    Vorrichtung nach einem der Ansprüche 1 oder 2,
**dadurch gekennzeichnet, dass**
die zwei optischen Platten (3,4), welche lateral in y-Richtung verschiebbar angeordnet sind, in ihrer Form zylinderähnlich ausgeführt sind, wobei jeweils eine erste Fläche plan und jeweils eine zweite Fläche durch die Funktionen $f(x,y) = \kappa \cdot y^4$ und $f(x,y) = -\kappa \cdot y^4$ beschreibbar sind.

5.    Vorrichtung nach Anspruch 1,
**dadurch gekennzeichnet, dass**
die optischen Platten (1,2,3,4) aus einem transparenten festen Material ausgeführt sind.

6.    Vorrichtung nach Anspruch 1,
**dadurch gekennzeichnet, dass**
die optischen Platten (1,2,3,4) als dünne Phasenplatten ausgebildet sind.

7.    Vorrichtung zur Erhöhung der Schärfentiefe eines optischen Systems, wobei das optische System mit einem Objektiv (9) zur Lichtbündelung versehen ist, wobei zwei optische Platten/Filter (10,11), insbesondere zwei Phasenplatten/ Phasenfilter, in einer Pupillenebene des Objektivs (9) entlang einer optischen Achse (6) (z-Richtung) angeordnet sind, welche nicht sphärisch ausgebildet sind und als System einen kubischen Phasenverlauf aufweisen, wobei die zwei optischen Platten (10,11) in entgegengesetzter Richtung längs ihrer Diagonalen verschiebbar angeordnet sind, und wobei eine relative Verschiebung $\Delta$ der zwei optischen Platten (10,11) zueinander gleichzeitig um den gleichen Betrag erfolgt.

**8.** Vorrichtung nach Anspruch 7,
**dadurch gekennzeichnet, dass**
die optischen Platten (10,11) nichtrotationssymmetrisch ausgebildet sind.

**9.** Vorrichtung nach Anspruch 7,
**dadurch gekennzeichnet, dass**
die zwei optischen Platten (10,11) im Freiformflächendesign ausgeführt sind, wobei jeweils eine erste Fläche plan und eine zweite Fläche jeweils durch die Funktionen $f(x,y) = \kappa \cdot (x^4+y^4)$ und $f(x,y) = -\kappa(x^4+y^4)$ beschreibbar sind.

**10.** Vorrichtung nach Anspruch 7,
**dadurch gekennzeichnet, dass**
die optischen Platten (10,11) aus einem transparenten festen Material ausgebildet sind.

**11.** Vorrichtung nach Anspruch 7,
**dadurch gekennzeichnet, dass**
die optischen Platten (10,11) als dünne Phasenplatten ausgebildet sind.

**12.** Verfahren zur Herstellung von nichtrotationssymmetrischen Phasenplatten einer Vorrichtung nach einem der Ansprüche 1 bis 11, welche asphärisch ausgebildet sind, wobei

a) in einem ersten Schritt eine metallische Aufnahmeeinrichtung (14) zum Auflegen einer Platte (15) hergestellt wird, deren Aufnahmefläche (17) durch die Funktionen $f(x,y) = \kappa \cdot x^4$, $f(x,y) = -\kappa \cdot x^4$, $f(x,y) = \kappa(x^4+y^4)$ oder $f(x,y) = -\kappa(x^4+y^4)$ beschrieben wird, wonach
b) in einem zweiten Schritt die Platte (15) in die metallische Aufnahmeeinrichtung (14) auf die Aufnahmefläche (17) aufgebracht wird, wobei mit einer Spanneinrichtung (16), welche an der Aufnahmeeinrichtung (14) angebracht wird, die Platte (15) derart verformt bzw. gebogen wird, dass sie sich der Aufnahmefläche (17) der Aufnahmeeinrichtung (14) anpasst, wonach
c) in einem dritten Schritt mit einer Bearbeitungseinrichtung eine neu entstandene Oberfläche der Platte (15) plan bzw. eben bearbeitet und poliert wird, und
d) abschließend die Platte (15) aus der Aufnahmeeinrichtung (14) entfernt wird.

**13.** Verfahren nach Anspruch 12,
**dadurch gekennzeichnet, dass**
die Platte (15) aus einem Material hergestellt wird, welches verformbar ist.

**14.** Vorrichtung nach einem der Ansprüche 1 bis 11 mit einer Vorrichtung zum Verschieben von zwei Phasenplatten mit zwei Halteelementen (19,20), auf denen die Phasenplatten (1,2) gelagert sind, wobei die zwei Halteelemente (19,20) über Federelemente (21) gegeneinander drückbar sind, und wobei mit einer Schiebeeinrichtung (24) die zwei Halteelemente (19,20) mit den zwei Phasenplatten (1,2) gleichzeitig und gleichmäßig gegeneinander verschiebbar sind.

**15.** Vorrichtung nach Anspruch 14,
**dadurch gekennzeichnet, dass**
die zwei Halteelemente (19,20) mit jeweils einer Mittenaussparung (29,30), in welcher die zwei Phasenplatten (1,2) gelagert sind, zum Durchlass von Lichtbündeln versehen sind.

**16.** Vorrichtung nach Anspruch 14,
**dadurch gekennzeichnet, dass**
die Schiebeeinrichtung (24) mit einer Stellschraube versehen ist.

**Claims**

1. Apparatus for increasing the depth of field of an optical system, the optical system being provided with an objective (9) for the purpose of focusing light, wherein four optical plates/filters (1,2,3,4), in particular four phase plates or phase filters, are arranged in a pupillary plane of the objective (9) along an optical axis (6) (z-direction), said plates/ filters not being of spherical design and exhibiting a. cubic phase curve as system, two optical plates (1,2) being arranged so as to be laterally displaceable in the x-direction, and two optical plates (3,4) being arranged so as to be laterally displaceable in the y-direction, and a relative displacement $\Delta$ of the, in each instance, two optical plates (1,2,3,4) in relation to one another taking place simultaneously by the same amount, in each instance in the lateral direction in relation to the optical axis (6).

2. Apparatus according to Claim 1,
**characterised in that** the optical plates (1,2,3,4) are of rotationally asymmetrical design.

3. Apparatus according to one of Claims 1 or 2,
**characterised in that** the two optical plates (1,2) which are arranged so as to be laterally displaceable in the x-direction are constructed in cylinder-like manner in shape, a first surface in each instance being plane and a second surface in each instance being capable of being described by the functions $f(x,y) = \kappa \cdot x^4$ and $f(x,y) = -\kappa \cdot x^4$.

4. Apparatus according to one of Claims 1 or 2,
**characterised in that** the two optical plates (3,4) which are arranged so as to be laterally displaceable in the y-direction are constructed in cylinder-like manner in shape, a first surface in each instance being plane and a second surface in each instance being capable of being described by the functions $f(x,y) = \kappa \cdot y^4$ and $f(x,y) = -\kappa \cdot y^4$.

5. Apparatus according to Claim 1,
**characterised in that** the optical plates (1,2,3,4) are constructed from a transparent solid material.

6. Apparatus according to Claim 1,
**characterised in that** the optical plates (1,2,3,4) take the form of thin phase plates.

7. Apparatus for increasing the depth of field of an optical system, the optical system being provided with an objective (9) for the purpose of focusing light, wherein two optical plates/filters (10,11), in particular two phase plates or phase filters, are arranged in a pupillary plane of the objective (9) along an optical axis (6) (z-direction), said plates/filters not being of spherical design and exhibiting a cubic phase curve as system, the two optical plates (10,11) being arranged so as to be displaceable in the opposite direction along their diagonals, and a relative displacement $\Delta$ of the two optical plates (10,11) in relation to one another taking place simultaneously by the same amount.

8. Apparatus according to Claim 7,
**characterised in that** the optical plates (10,11) are of rotationally asymmetrical design.

9. Apparatus according to Claim 7,
**characterised in that** the two optical plates (10,11) are constructed with a free-form surface design, a first surface in each instance being plane and a second surface in each instance being capable of being described by the functions $f(x,y) = \kappa \cdot (x^4+y^4)$ and $f(x,y) = -\kappa \cdot (x^4+y^4)$.

10. Apparatus according to Claim 7,
**characterised in that** the optical plates (10,11) are formed from a transparent solid material.

11. Apparatus according to Claim 7,
**characterised in that** the optical plates (10,11) take the form of thin phase plates.

12. Process for producing rotationally asymmetrical phase plates of an apparatus according to one of Claims 1 to 11, said phase plates being of aspherical design, wherein

a) in a first step, a metallic receiving device (14) for application of a plate (15) is produced, the receiving surface (17) of which is described by the functions $f(x,y) = \kappa \cdot x^4$, $f(x,y) = -\kappa \cdot x^4$, $f(x,y) = \kappa \cdot (x^4+y^4)$ or $f(x,y) = -\kappa \cdot (x^4+y^4)$, after which
b) in a second step, the plate (15) is applied into the metallic receiving device (14) onto the receiving surface (17), the plate (15) being deformed or bent in such a manner with a tensioning device (16) which is attached to the receiving device (14) that it is adapted to the receiving surface (17) of the receiving device (14), after which
c) in a third step, a newly formed surface of the plate (15) is machined and polished in plane or flat manner with a machining device, and
d) finally, the plate (15) is removed from the receiving device (14).

13. Process according to Claim 12,
**characterised in that**
the plate (15) is produced from a material that is deformable.

14. Apparatus according to one of Claims 1 to 11 with an apparatus for displacing two phase plates with two holding elements (19,20) on which the phase plates (1,2) are supported, the two holding elements (19,20) being capable of being pressed against one another via spring elements (21), and the two holding elements (19,20) with the two phase plates (1,2) being capable of being displaced simultaneously and uniformly towards one another with a sliding device (24).

15. Apparatus according to Claim 14,
**characterised in that**
the two holding elements (19,20) are respectively provided with a central recess (29,30) in which the two phase plates (1,2) are supported, for the purpose of passing light beams through.

16. Apparatus according to Claim 14,
**characterised in that**
the sliding device (24) is provided with a set screw.

**Revendications**

1. Dispositif pour augmenter la profondeur de champ d'un système optique, dans lequel le système optique est pourvu d'un objectif (9) pour la focalisation de la lumière, dans lequel quatre filtres/plaques optiques (1, 2, 3, 4), en particulier quatre plaques/filtres de phase, sont disposées dans le plan d'une pupille de l'objectif (9) le long d'un axe optique (6) (axe z), sont non sphériques et présentent, en tant que système, un tracé de phase cubique, deux plaques optiques (1, 2) étant disposées de manière décalable latéralement sur l'axe x et deux plaques optiques (3, 4) étant disposées de manière mobile latéralement sur l'axe y et un décalage relatif $\Delta$ de deux plaques optiques (1, 2, 3, 4) entre elles étant effectué simultanément de la même quantité dans la direction latérale par rapport à l'axe optique (6).

2. Dispositif selon la revendication 1,
**caractérisé en ce que**
les plaques optiques (1, 2, 3, 4) sont conçues sans symétrie de révolution.

3. Dispositif selon l'une des revendications 1 ou 2,
**caractérisé en ce que**
les deux plaques optiques (1, 2), qui sont disposées de manière décalable latéralement sur l'axe x, présentent une forme de type cylindrique, une première surface étant plane et une seconde surface pouvant être décrite par les fonctions $f(x,y) = \kappa x^4$ et $f(x,y) = -\kappa x^4$.

4. Dispositif selon l'une des revendications 1 ou 2,
**caractérisé en ce que**
les deux plaques optiques (3, 4) qui sont disposées de manière décalable latéralement sur l'axe y, présentent une forme de type cylindrique, une première surface étant plane et une seconde surface pouvant être décrite par les fonctions $f(x,y) = \kappa y^4$ et $f(x,y) = -\kappa y^4$.

5. Dispositif selon la revendication 1,
**caractérisé en ce que**
les plaques optiques (1, 2, 3, 4) sont constituées d'un matériau solide transparent.

6. Dispositif selon la revendication 1,
**caractérisé en ce que**

les plaques optiques (1, 2, 3, 4) sont conçues comme des plaques de phase minces.

7. Dispositif pour augmenter la profondeur de champ d'un système optique, dans lequel le système optique est pourvu d'un objectif (9) pour la focalisation de la lumière, dans lequel deux plaques/filtres optiques (10, 11), en particulier deux plaques/filtres de phases, sont disposées dans le plan d'un pupille de l'objectif (9) le long d'un axe optique (6) (axe z), sont non sphériques et présentent, en tant que système, un tracé de phase cubique, les deux plaques optiques (10, 11) étant disposées de manière décalable dans des directions opposées le long de leurs diagonales, un décalage relatif Δ des deux plaques optiques (10, 11) entre elles étant effectué simultanément de la même quantité.

8. Dispositif selon la revendication 7,
**caractérisé en ce que**
les plaques optiques (10, 11) sont conçues sans symétrie de révolution.

9. Dispositif selon la revendication 7,
**caractérisé en ce que**
les deux plaques optiques (10, 11) sont conçues avec des surfaces à formes libres, une première surface étant plane et une seconde surface pouvant être décrite par les fonctions $f(x,y)= \kappa (x^4+y^4)$ et $f(x,y) = -\kappa (x^4+y^4)$.

10. Dispositif selon la revendication 7,
**caractérisé en ce que**
les plaques optiques (10, 11) sont constituées d'un matériau solide transparent.

11. Dispositif selon la revendication 7,
**caractérisé en ce que** les plaques optiques (10, 11) sont conçues comme des plaques de phase minces.

12. Procédé de fabrication de plaques de phases sans symétrie de révolution pour un dispositif selon l'une des revendications 1 à 11, de forme asphérique, dans lequel:

a) dans une première étape, un dispositif de logement métallique (14) est réalisé pour la pose d'une plaque (15), dont la surface de logement (17) est décrite par les fonctions $f(x,y)= \kappa x^4$, $f(x,y) = -\kappa x^4$, $f(x,y)= \kappa (x^4+y^4)$ ou $f(x,y) = -\kappa (x^4+y^4)$

b) dans une deuxième étape, la plaque (15) est posée sur le dispositif de logement métallique (14) dans la surface de logement (17), la plaque (15) étant déformée ou pliée avec un dispositif de serrage (16) prévu sur le dispositif de logement (14) de façon à ce qu'elle s'adapté à la surface de logement (17) du dispositif de logement (14),

c) dans une troisième étape, la nouvelle surface ainsi obtenue sur la plaque (15) est traitée et polie de manière plane ou régulière à l'aide d'un dispositif de traitement, et

d) finalement la plaque (15) est retirée du dispositif de logement (14).

13. Procédé selon la revendication 12,
**caractérisé en ce que**
la plaque (15) est constituée d'un matériau déformable.

14. Dispositif selon l'une des revendications 1 à 11 avec un dispositif pour le décalage de deux plaques de phases avec deux éléments de maintien (19, 20) sur lesquels les plaques de phases (1, 2) sont posées, dans lequel les deux éléments de maintien (19, 20) peuvent être comprimés l'un contre l'autre par des éléments ressort (21), et dans lequel les deux éléments de maintien (19, 20) peuvent être décalés entre eux simultanément et régulièrement avec les deux plaques de phases (1, 2) avec un dispositif de poussée (24).

15. Dispositif selon la revendication 14,
**caractérisé en ce que**
les deux éléments de maintien (19, 20) sont pourvus chacun d'un évidement central (29, 30) dans lequel sont logées les deux plaques de phases (1, 2), pour le passage des faisceaux lumineux.

16. Dispositif selon la revendication 14,
**caractérisé en ce que**
le dispositif de poussée (24) est pourvu d'une vis de réglage.

Fig. 1

Fig. 2

EP 1 445 640 B1

Fig. 3

Fig. 4a

Fig. 4b

Fig. 4c

EP 1 445 640 B1

Fig. 5

Fig. 6

Fig. 7

Fig. 8

Fig. 9

EP 1 445 640 B1

Fig. 10

Fig. 11a

Fig. 11b

Fig. 12

EP 1 445 640 B1

Fig. 13

17,5λ

Fig. 14

Pupillenradius

PY

PX
Pupillenradius

W

W

28

EP 1 445 640 B1

Fig. 15

EP 1 445 640 B1

EP 1 445 640 B1

13

14

15 17

16

Fig. 16

18

21    27    28    21

23    22

24

1    2

29    30

19    25    26    20

Fig. 17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0702817 B1
- WO 9624085 A
- WO 9957599 A

**In der Beschreibung aufgeführte Nicht-Patentliteratur**

- Wavefront Coding: A modern method of achieving high performance and/or low cost imaging systems. **E.R. DOWSKI ; G.E. JOHNSON.** Presented at SPIE Annual Meeting. August 1999
- **E.R. DOWSKI ; W.T. CATHEY.** *Applied Optics,* vol. 34 (11), 1859-1866
- **E.R. DOWSKI.** An Information Theory Approach to Incoherent Information Processing Systems. *Signal Recovery and Synthesis V, OSA Technical Digest Series,* Marz 1995, 106-108
- **A.R. FITZGERRELL ; E.R. DOWSKI ; W.T. CATHEY.** Defocus Transfer Function for Circularly Symmetric Pupils. *Applied Optics,* 1997, vol. 36, 5796-5804
- **J. VAN DER GRACHT ; E.R. DOWSKI ; M. TAYLOR ; D. DEAVER.** Broadband Behavior of an Optical-Digital Focus-Invariant System. *Optics Letters,* 01. Juli 1996, vol. 21 (13), 919-921